# EUROPEAN PATENT APPLICATION

(11) **EP 4 842 105 A1**
(43) Date of publication of application: **18.11.2026**
(21) Application number: 25739188.8
(22) Date of filing: 02.01.2025
(51) Int. Cl.: H04W 72/0453, H04L 5/00, H04W 72/53, H04W 84/12, H04L 27/26

(54) **DISTRIBUTED RESOURCE UNIT-BASED TRANSMISSION OR RECEPTION METHOD AND DEVICE IN WIRELESS LAN SYSTEM**

(30) Priority: 10.01.2024 KR 20240004394; 29.01.2024 KR 20240013420; 20.02.2024 KR 20240024549
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Plasseraud IP
(86) International application number: PCT/KR2025/099001
(87) International publication number: WO 2025/151020

(57) **Abstract**

Disclosed are a distributed resource unit (DRU)-based transmission or reception method and device in a wireless LAN system. The method, according to one aspect of the present disclosure, may comprise the steps of: receiving, from an access point (AP) and by means of a station (STA), a frame including information related to a multiple DRU (MDRU) comprising a first DRU in a first distributed bandwidth (DBW) and a second DRU in a second DBW; and transmitting, to the AP and by means of the STA, a physical layer protocol data unit (PPDU) including a data field mapped to the MDRU. The information related to the MDRU may include information related to an index of the first DRU. An index of the second DRU may be associated with the index of the first DRU.

## Description

### [TECHNICAL FIELD]

The present disclosure relates to a method and a device for transmission or reception based on a distributed resource unit in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

A technical object of the present disclosure is to provide a method and a device for transmission or reception based on a distributed resource unit (DRU) in a wireless local area network (WLAN) system.

A technical object of the present disclosure is to provide a method and a device for signaling for a multiple DRU (MDRU) composed of a plurality of DRUs and MDRU-based transmission or reception in a wireless local area network (WLAN) system.

The technical objects to be achieved by the present disclosure are not limited to the above-described technical objects, and other technical objects which are not described herein will be clearly understood by those skilled in the pertinent art from the following description.

### [Technical Solution]

A method according to an aspect of the present disclosure may include receiving, by a station (STA) from an access point (AP), a frame including information related to a multiple distributed resource unit (MDRU) including a first distributed resource unit (DRU) within a first distribution bandwidth (DBW) and a second DRU within a second DBW; and transmitting, by the STA to the AP, a physical layer protocol data unit (PPDU) including a data field mapped to the MDRU. Information related to the MDRU may include information on an index of the first DRU. An index of the second DRU may be associated with an index of the first DRU.

A method according to an additional aspect of the present disclosure may include transmitting, by an access point (AP) to a station (STA), a frame including information related to a multiple distributed resource unit (MDRU) including a first distributed resource unit (DRU) within a first distribution bandwidth (DBW) and a second DRU within a second DBW; and receiving, by the AP from the STA, a physical layer protocol data unit (PPDU) including a data field mapped to the MDRU. Information related to the MDRU may include information on an index of the first DRU. An index of the second DRU may be associated with an index of the first DRU.

### [Technical Effects]

According to the present disclosure, a method and a device for transmission or reception based on a distributed resource unit (DRU) in a wireless local area network (WLAN) system may be provided.

According to the present disclosure, a method and a device for signaling for a multiple DRU (MDRU) composed of a plurality of DRUs and MDRU-based transmission or reception in a wireless local area network (WLAN) system may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIGS. 8 to 10 are diagrams for describing examples of resource units of a WLAN system to which the present disclosure may be applied.
FIG. 11 is a diagram for describing examples of a DRU to which the present disclosure may be applied.
FIG. 12 is a diagram representing the exemplary format of a trigger frame to which the present disclosure may be applied.
FIG. 13 is a diagram for describing an example of an operation of a STA according to the present disclosure.
FIG. 14 is a diagram for describing an example of an operation of an AP according to the present disclosure.
FIG. 15 is a diagram for describing examples of an MDRU according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

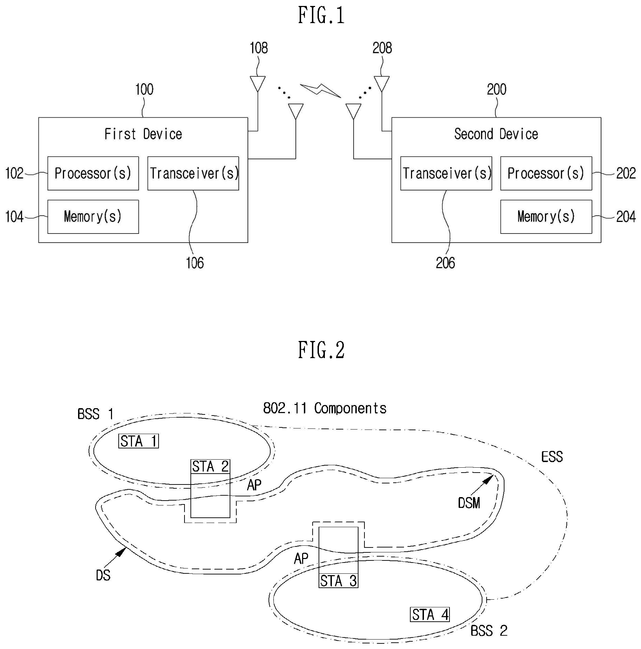

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

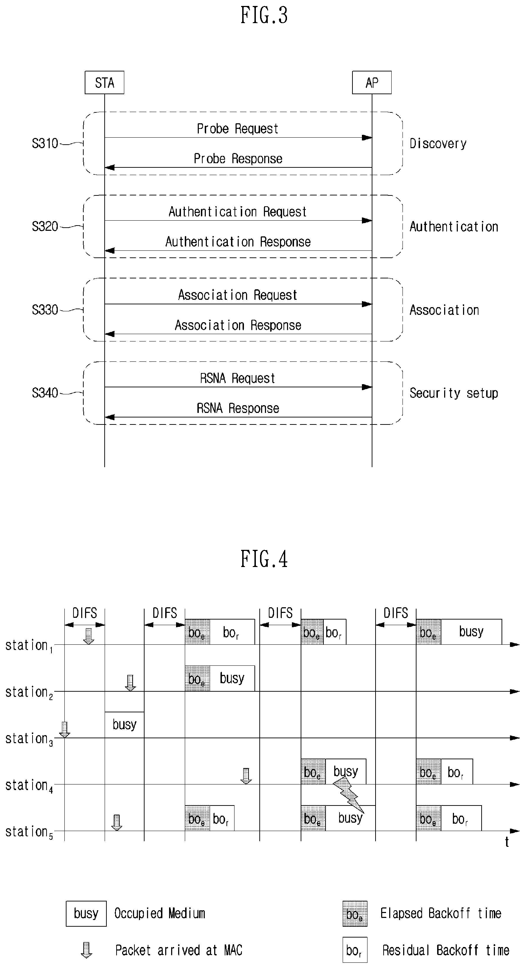

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

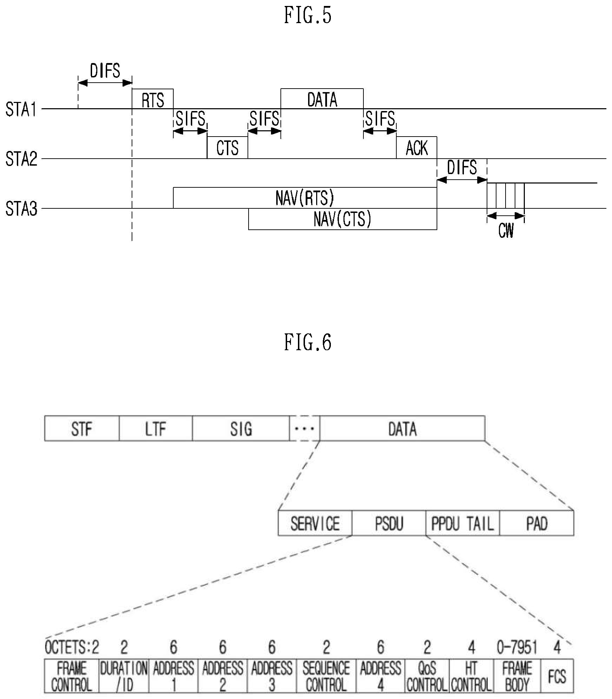

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

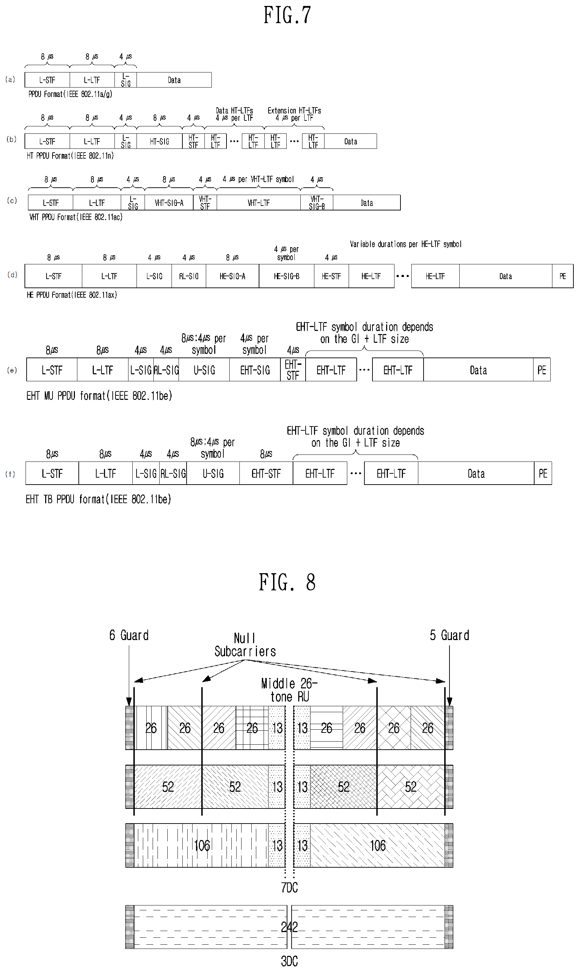

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Resource Unit

FIGS. 8 to 10 are diagrams for describing examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

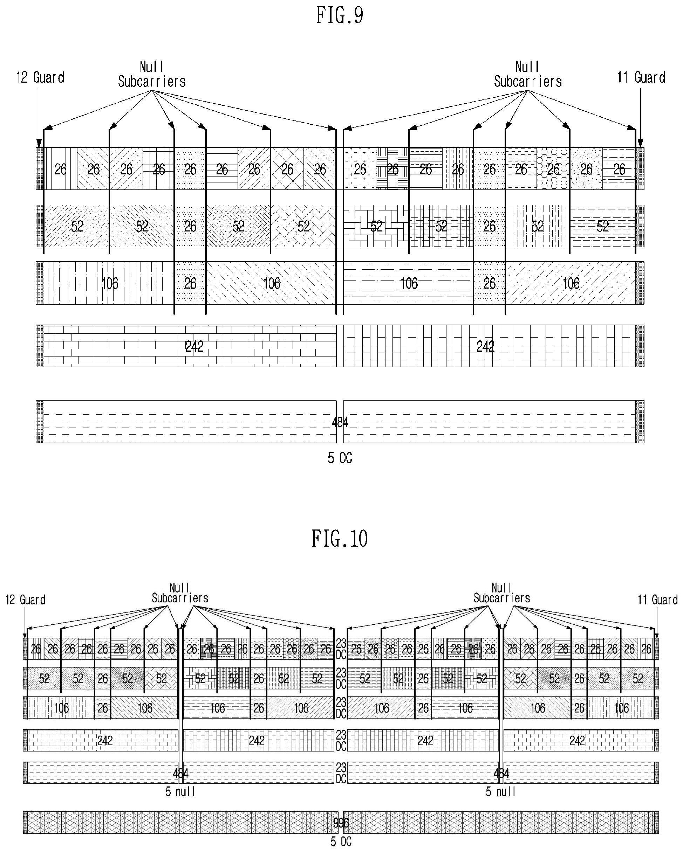

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8.

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, the STA transmitting the DL MU PPDU (e.g., AP) may allocate a first RU (e.g., 26/52/106/242-RU, etc.) to a first STA and allocate a second RU (e.g., 26/52/106/242-RU, etc.) to a second STA. In other words, a transmitting STA (e.g., an AP) may transmit a X-STF (e.g., X is HE, EHT, etc.), a X-LTF and a data field for the first STA through the first RU within one MU PPDU, and may transmit a X-STF, a X-LTF and a data field for the second STA through the second RU. Information about the arrangement of a RU may be signaled through the X-SIG (e.g., X is HE, EHT, U) field of a X-PPDU format.

### Distributed Resource Unit

The limitations on power spectral density (PSD) may be applied in a sub-7GHz (e.g., 6GHz) band due to regulations in various regions. For a non-AP STA in a low power indoor (LPI) band, a PSD limitation may be -1dBm/MHz. For example, for the existing 52-tone RU, the maximum transmission (Tx) power may be approximately 6dBm.

In addition, different limitations may be applied in a 2.4GHz band and a 5GHz band. For example, in EU/China/Japan/Korea, a PSD limitation of 10dBm/MHz may be applied in a 2.4GHz band. For the existing 52-tone RU, the maximum Tx power may be approximately 17dBm. If a PSD limitation may be avoided in a 5GHz band, transmission power may be increased. For example, the maximum transmission power is 24dBm for the existing 52-tone RU, which is still lower by 6dBm than the maximum allowable effective isotropic radiated power (EIRP) of 30dBm.

When a PSD limitation is overcome, transmission power may be increased, thereby enhancing spectrum efficiency or extending a range.

Considering that a PSD limitation is defined per MHz for each STA, when the tones of a small RU are distributed on a wide bandwidth, tones for each STA are non-contiguous, so each tone may be transmitted with high power. A RU including tones distributed in this way is referred to as a distributed RU (DRU), and in order to distinguish from it, a RU including contiguous tones defined in an existing WLAN system (e.g., a system according to IEEE 802.11ax, 11be, etc.) may be referred to as a regular RU (RRU).

Compared to a STA transmitting an existing RRU, a STA transmitting a DRU may use high power. For example, a 52-tone DRU across 80MHz has only one tone per MHz, while for a 52-tone RRU, there are approximately 13 tones per MHz. When a PSD limitation of -1dBm/MHz is assumed in a 6GHz LPI band, for a 52-tone RU, transmission power may be increased by 11dB when a DRU is used. When transmission power is increased in this way, higher MCS may be applied and a longer range may be supported.

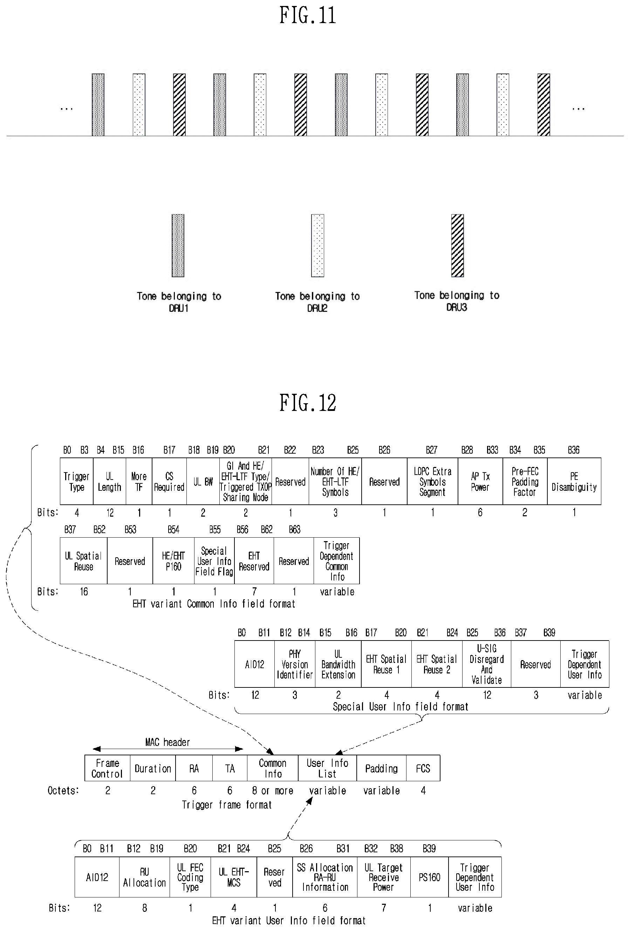

FIG. 11 is a diagram for describing examples of a DRU to which the present disclosure may be applied.

The example of FIG. 11 illustratively shows that STA1 performs transmission on DRU1, STA2 performs transmission on DRU2 and STA3 performs transmission on DRU3. Each STA may apply a transmission power boost by using a DRU. Compared to when a RRU in the same size is used, higher transmission power is applied to all tones in a DRU, and accordingly, spectral efficiency may be greatly improved. In this way, a DRU may be usefully applied particularly in UL-OFDMA.

In case of an AP, a DRU may also be utilized. In some cases, an AP may perform DL-OFDMA transmission to STA(s) by using only some of DRU1, DRU2 and DRU3, and in this case, a transmission power boost due to the use of a DRU may be applied.

In order to maximize a power boost, tones within one DRU may be distributed as far as possible. For example, a DRU including one tone per MHz may be considered an optimal example. The size of a DRU (or the number of available tones (i.e., the number of the remaining tones excluding unavailable tones such as a null tone, a guard tone, a DC tone, etc.) included in one DRU) may be defined to be the same as the size of a RRU (or the number of available tones included in one RRU). Accordingly, effects on various technologies defined previously based on a RRU may be minimized. A table below shows an example of an achievable power boost (in the unit of dB) for various DRUs distributed on a different bandwidth. The examples in a table below assume a 6GHz LPI band, and a power boost may also be obtained in a 2.4GHz band and a 5GHz band in other regions. For example, in 80MHz UL-OFDMA transmission by 8 users, when each user uses a 106-tone DRU, the overall performance may be enhanced by approximately 8.13dB compared to when each user uses a 106-tone RRU. In this way, a DRU may be used to overcome PSD limitations and obtain significant benefits.

**[Table 1]**

| | 20MHz Bandwidth | 40MHz Bandwidth | 80MHz Bandwidth |
|---|---|---|---|
| 26-tone RU | 8.13 | 11.14 | 11.14 |
| 52-tone RU | 6.37 | 8.13 | 11.14 |
| 106-tone RU | 3.36 | 6.37 | 8.13 |
| 242-tone RU | Not Applicable | 2.69 | 5.12 |
| 484-tone RU | Not Applicable | Not Applicable | 2.69 |

FIG. 12 is a diagram representing the exemplary format of a trigger frame to which the present disclosure may be applied.

A trigger frame may allocate a resource for at least one TB PPDU transmission and request TB PPDU transmission. A trigger frame may also include other information required by a STA transmitting a TB PPDU in response thereto. A trigger frame may include common information (common info) and user information list (user info list) fields in a frame body.

A common information field may include information that is commonly applied to at least one TB PPDU transmission requested by a trigger frame, e.g., a trigger type, a UL length, whether a subsequent trigger frame exists (e.g., More TF), whether channel sensing (CS) is required, a UL bandwidth (BW), etc. FIG. 12 illustratively shows an EHT variant common information field format.

A trigger type subfield of a 4-bit size may have a value of 0-15. Among them, 0, 1, 2, 3, 4, 5, 6 and 7, values of a trigger type subfield, are defined as corresponding to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and values of 8-15 are defined as being reserved.

Among the common information, a trigger dependent common information subfield may include information that is selectively included based on a trigger type.

A special user information field may be included within a trigger frame. A special user information field does not include user-specific information, but includes extended common information that is not provided in a common information field.

A user information list includes at least 0 user information field. FIG. 12 illustratively shows an EHT variant user information field format.

An AID12 subfield basically represents that it is a user information field for a STA having a corresponding AID. In addition, when an AID12 field has a predetermined specific value, it may be utilized for other purposes such as allocating a random access (RA)-RU or being configured in the form of a special user information field. A special user information field is a user information field that does not include user-specific information but includes extended common information not provided in a common information field. For example, a special user information field may be identified by an AID12 value of 2007, and a special user information field flag subfield within a common information field may represent whether a special user information field is included.

A RU allocation subfield may represent the size and location of a RU/a MRU. For this purpose, a RU allocation subfield may be interpreted together with the PS160 (primary/secondary 160MHz) subfield of a user information field, the UL BW subfield of a common information field, etc.

For example, as shown in Table 2 below, the mapping of B7-B1 of a RU allocation subfield may be defined together with the settings of the B0 and PS160 subfields of a RU allocation subfield. Table 2 shows an example of encoding the PS160 subfield and the RU allocation subfield of an EHT variant user information field.

**[Table 2]**

| **PS160 subfield** | **B0 of the RU Allocation subfteld** | **B7-B1 of the RU Allocation subfield** | **Bandwidth (MHz)** | **RU/MRU size** | **RU/MRU index** | **PHY RU/ MRU index** |
|---|---|---|---|---|---|---|
| 0-3: | | 0-8 | 20, 40, 80, 160, or 320 | 26 | RU1 to RU9, respectively | 37×*N*+RU index |
| 80 MHz segment where the RU is located | | | | | | |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37 respectively | |
| | | 37-40 | 20, 40, 80, 160, or 320 | 52 | RU1 to RU4, respectively | 16×*N*+RU index |
| | | 41-44 | 40, 80, 160, or 320 | | RU5 to RU8, respectively | |
| | | 45-52 | 80, 160, or 320 | | RU9 to RU16, respectively | |
| | | 53, 54 | 20, 40, 80, 160, or 320 | 106 | RU1 and RU2, respectively | 8×*N*+RU index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80, 160, or 320 | 242 | RU1 | 4×*N*+RU index |
| | | 62 | 40, 80, 160, or 320 | | RU2 | |
| | | 63, 64 | 80, 160, or 320 | | RU3 and RU4, respectively | |
| | | 65 | 40,80, 160, or 320 | 484 | RU1 | 2×*N*+RU index |
| | | 66 | 80, 160, or 320 | | RU2 | |
| | | 67 | 80, 160, or 320 | 996 | RU1 | *N+ RU* index |
| 0-1: | 0 | 68 | Reserved | | | Reserved |
| 160 MHz segment where the RU is located | 1 | | 160 or 320 | 2×996 | RU1 | X1 + RU index |
| 0 | 0 | 69 | Reserved | | | Reserved |
| 0 | 1 | | | | | |
| 1 | 0 | | | | | |
| 1 | 1 | | 320 | 4×996 | RU1 | RU1 |
| 0-3: | | 70-72 | 20, 40, 80, 160, or 320 | 52+26 | MRU1 to MRU3, respectively | |
| 80 MHz segment where the RU is located | | | | | | |
| | | 73-75 | 40, 80, 160, or 320 | 52+26 | MRU4 to MRU6, respectively | 12×*N*+ MRU index |
| | | 76-81 | 80, 160, or 320 | 52+26 | MRU7 to MRU12, respectively | |
| | | 82, 83 | 20, 40, 80, 160, or 320 | 106+26 | MRU1 and MRU2, respectively | |
| | | 84, 85 | 40, 80, 160, or 320 | 106+26 | MRU3 and MRU4, respectively | 8×*N*+ MRU index |
| | | 86-89 | 80, 160. or 320 | 106+26 | MRU5 to MRU8, respectively | |
| | | 90-93 | 80, 160, or 320 | 484+242 | MRU1 to MRU4, respectively | 4×*N*+ MRU index |
| 0-1: | 0 | 94, 95 | 160 or 320 | 996+484 | MRU1 and MRU2, respectively | 4×X1 + MRU index |
| 160 MHz segment where the MRU is located | | | | | | |
| | 1 | | | | MRU3 and MRU4, respectively | |
| 0-1: | 0 | 96-99 | 160 or 320 | 996+484+ 242 | MRU1 to MRU4, respectively | 8×X1 + MRU index |
| 160 MHz segment where the MRU is located | | | | | | |
| | 1 | | | | MRU5 to MRU8, respectively | |
| 0 | 0 | 100-103 | 320 | 2×996 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×996 +484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any | Reserved | Reserved | Reserved |

When B0 of a RU allocation subfield is set as 0, it may represent that RU/MRU allocation is applied to a primary 80MHz channel, and when its value is set as 1, it may represent that RU allocation is applied to the secondary 80MHz channel of primary 160MHz. When B0 of a RU allocation subfield is set as 0, it may represent that RU/MRU allocation is applied to the lower 80MHz of secondary 160MHz, and when its value is set as 1, it may represent that RU allocation is applied to the upper 80MHz of secondary 160MHz.

In the trigger frame RU allocation table of Table 2, parameter N may be calculated based on the formula of N=2*X1+X0. For a bandwidth less than or equal to 80MHz, values of PS160, B0, X0 and X1 may be set as 0. For a 160MHz bandwidth and a 320MHz bandwidth, values of PS160, B0, X0 and X1 may be set as shown in Table 3. This configuration represents the absolute frequency order for primary and secondary 80MHz and 160MHz channels. The order from left to right represents the order from low frequency to high frequency. A primary 80MHz channel is indicated as P80, a secondary 80MHz channel is indicated as S80, and a secondary 160MHz channel is indicated as S160.

**[Table 3]**

| **Bandwidth (MHz)** | **Inputs** | | | **Outputs** | | |
|---|---|---|---|---|---|---|
| | **Configuration** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

### A method for indicating information for a multiple DRU (MDRU)

As described above, in order to overcome a PSD restriction and improve a power gain, a DRU using a distributed tone/subcarrier, not an RRU using a contiguous tone/subcarrier, may be applied.

For a multiple DRU (MDRU) configured/formed by combining a plurality of DRUs, the present disclosure proposes a method for providing information indicating a corresponding MDRU (e.g., information for a DRU configuring a corresponding MDRU/MDRU).

In this regard, a method proposed in the present disclosure may be based on a multiple DRU (MDRU) configured/formed by combining a (specific) DRU distributed across a different channel as well as a MDRU configured/formed by combining a DRU distributed within the same channel.

For example, an MDRU composed of a combination of DRUs distributed within the same channel may include a 106+26-tone MDRU, a 52+26-tone MDRU, a 484+242-tone MDRU, a 996+484-tone MDRU and a 996+484+242-tone MDRU.

For example, for an MDRU composed of a combination of DRUs distributed within a different channel, a 20MHz+20MHz MDRU, a 40MHz+20MHz MDRU, a 40MHz+40MHz MDRU, an 80MHz+20MHz MDRU, an 80MHz+40MHz MDRU, an 80MHz+40MHz+20MHz MDRU, an 80MHz+80MHz MDRU, a 160MHz+80MHz MDRU, a 160MHz+160MHz MDRU, etc. may be defined.

In the present disclosure, an X MHz+Y MHz MDRU may refer to a combination of a DRU (or a component MDRU) distributed in X MHz and a DRU (or a component MDRU) distributed in Y MHz. Here, a component MDRU may refer to a multiple DRU included in one channel utilized/included in the configuration of an MDRU.

As a specific example, for a 20MHz+20MHz MDRU, a 106+26-tone MDRU, a 52+26-tone MDRU, a 26+26-tone MDRU, a 52+52-tone MDRU, a 106+106-tone MDRU, etc. may be defined. For a 40MHz+20MHz MDRU, a 106+26-tone MDRU, a 52+26-tone MDRU, a 106+52-tone MDRU, a 242+106-tone MDRU, etc. may be defined. For a 40MHz+40MHz MDRU, a 106+26-tone MDRU, a 52+26-tone MDRU, a 26+26-tone MDRU, a 52+52-tone MDRU, a 106+106-tone MDRU, a 242+242-tone MDRU, etc. may be defined. For an 80MHz+20MHz MDRU, a 106+26-tone MDRU, a 242+52-tone MDRU, a 242+106-tone MDRU, a 484+106-tone MDRU, etc. may be defined. For an 80MHz+40MHz MDRU, a 484+242-tone MDRU, a 52+26-tone MDRU, a 26+26-tone MDRU, a 106+52-tone MDRU, a 242+106-tone MDRU, etc. may be defined. For an 80MHz+40MHz+20MHz MDRU, a 106+52+26-tone MDRU, a 242+106+52-tone MDRU, a 484+242+106-tone MDRU, etc. may be defined. For an 80MHz+80MHz MDRU, a 484+242-tone MDRU, a 484+484-tone MDRU, a 26+26-tone MDRU, a 52+52-tone MDRU, a 106+106-tone MDRU, a 242+242-tone MDRU, a 52+26-tone MDRU, etc. may be defined. For a 160MHz+80MHz MDRU, a 484+242-tone MDRU, a 996+484-tone MDRU, a 996+484+242-tone MDRU (herein, a 484-tone DRU and a 242-tone DRU are a DRU (or a component MDRU) included in one 80MHz channel), a 106+26-tone MDRU, a 106+52-tone MDRU, a 52+52-tone MDRU, a 52+26-tone MDRU, a 26+26-tone MDRU, etc. may be defined. For a 160MHz+160MHz MDRU, a 484+242-tone MDRU, a 996+484-tone MDRU, a 996+484+242-tone MDRU (herein, a 484-tone DRU and a 242-tone DRU are a DRU (or a component MDRU) included in one 160MHz channel), a 996+996-tone MDRU, a 242+242-tone MDRU, a 484+484-tone MDRU, a 106+106-tone MDRU, a 106+26-tone MDRU, a 106+52-tone MDRU, a 52+52-tone MDRU, a 52+26-tone MDRU, a 26+26-tone MDRU, etc. may be defined.

In the present disclosure, with respect to various MDRUs as described above, when transmitting a PPDU by allocating a specific MDRU to a specific STA, information regarding this may be indicated/signaled. For example, a signaling scheme for MDRU allocation in a multi-user (MU) PPDU during an OFDMA transmission, and a signaling scheme in a trigger frame for MDRU allocation in a TB PPDU may be considered.

Hereinafter, various examples of the present disclosure related to restrictions on combinations of DRUs corresponding to an MDRU will be described. In the following examples, a case in which a combination of two DRUs, a first DRU and a second DRU, corresponds to one MDRU will be mainly described, but a case in which a combination of more than two DRUs corresponds to one MDRU is not excluded. In addition, a plurality of DRUs combined as one MDRU may all correspond to DRUs within the same channel, and some/all may correspond to DRUs within different channels.

In the following description, when a plurality of DRUs are included in different channels, a first channel including a first DRU is referred to as a first distribution bandwidth (DBW), and a second channel including a second DRU is referred to as a second DBW. For example, the first DBW and the second DBW may have an identical size or different sizes.

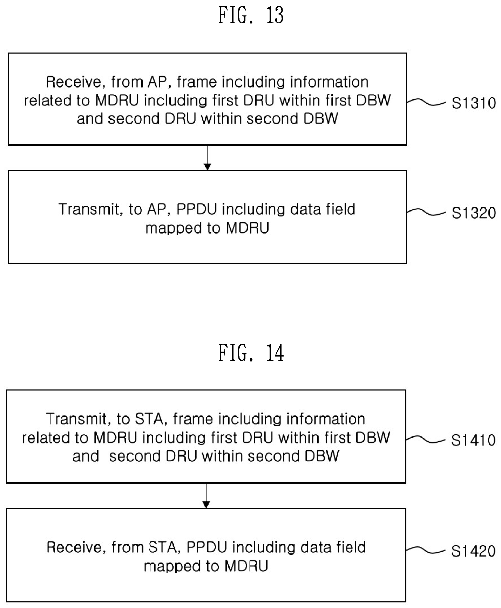

FIG. 13 is a diagram for describing an example of an operation of a STA according to the present disclosure.

In step S1310, a STA may receive, from an AP, a frame including information related to an MDRU including a first DRU within a first DBW and a second DRU within a second DBW.

For example, information related to the MDRU may include information on an index of the first DRU. An index of the second DRU may be associated with an index of the first DRU. For example, the first DRU and the second DRU may be limited to predefined or predetermined limited combinations. For example, a value of the index of the first DRU and a value of the index of the second DRU may be identical. For example, a frequency-domain position of the first DRU on the first DBW and a frequency-domain position of the second DRU on the second DBW may be identical. For example, either one of the first DRU and the second DRU may be limited to a DRU having a specific position/index within the corresponding DBW.

When information related to the MDRU includes information representing that the MDRU is applied to the PPDU, an index value of the second DRU may be derived based on an index of the first DRU. For example, as described above, when information on the index of the first DRU is included in the information related to the MDRU and the MDRU is additionally applied, the index of the second DRU may be derived based on a value of the index of the first DRU and a predetermined mapping relationship between the index of the first DRU and the index of the second DRU.

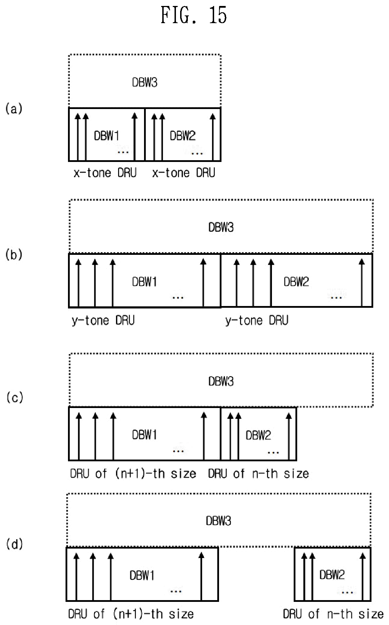

A size of the first DBW and a size of the second DBW may be identical (or may be limited to such a case). In this case, in a frequency domain, the first DBW and the second DBW may be included in (or may be limited to such a case) a position of a third DBW having a size that is twice the size of the first DBW (or the size of the second DBW) (e.g., see FIG. 15(a) or FIG. 15(b)). In addition, a size of the first DRU and a size of the second DRU may be identical (or may be limited to such a case) (e.g., x-tone DRUs of FIG. 15(a) or y-tone DRUs of FIG. 15(b)).

A size of the first DBW and a size of the second DBW may be different (or may be limited to such a case). In this case, the size of the first DBW may be twice the size of the second DBW (or may be limited to such a case). In a frequency domain, the first DBW and the second DBW may be included in (or may be limited to such a case) a position of a third DBW having a size that is twice the size of the first DBW (e.g., see FIG. 15(c) or FIG. 15(d)). In this case, the first DBW and the second DBW may be contiguous (e.g., FIG. 15(c)) or spaced apart (e.g., FIG. 15(d)) in a frequency domain. A case in which the first DBW and the second DBW are spaced apart in the frequency domain may include a case in which at least one channel between the first DBW and the second DBW is punctured.

When a size of the first DBW and a size of the second DBW are different, the first DRU may correspond to a DRU of an (n+1)-th size (wherein n is an integer greater than 0) (e.g., a DRU of an (n+1)-th size of FIG. 15(c) or FIG. 15(d)), and the second DRU may correspond to a DRU of an n-th size (e.g., a DRU of an n-th size of FIG. 15(c) or FIG. 15(d)) (or may be limited to such a case). For example, a DRU of a first size may correspond to a 26-tone DRU, a DRU of a second size may correspond to a 52-tone DRU, a DRU of a third size may correspond to a 106-tone DRU, a DRU of a fourth size may correspond to a 242-tone DRU, a DRU of a fifth size may correspond to a 484-tone DRU, and a DRU of a sixth size may correspond to a 996-tone DRU.

When a size of the first DBW and a size of the second DBW are different, a number of candidates for a value of an index of the first DRU in the first DBW may be identical to a number of candidates for a value of an index of the second DRU in the second DBW (or may be limited to such a case). For example, a candidate for an index value of the second DRU among a set of values of indices of DRUs of an n-th size in the second DBW may include at least one remaining index other than at least one index of a DRU of the n-th size that is not included in a position of a DRU of an (n+1)-th size in a frequency domain (or may be limited to such a case).

When a size of the first DBW and a size of the second DBW are identical or different, a candidate for an index value of the second DRU among a set of values of indices of DRUs of an n-th size in the second DBW may include at least one index of a DRU of the n-th size that is not included in a position of a DRU of an (n+1)-th size in a frequency domain (or may be limited to such a case).

In step S1320, a STA may transmit, to the AP, a PPDU including a data field mapped to the MDRU.

The method described in the example of FIG. 13 may be performed by the first device (100) of FIG. 1. For example, at least one processor (102) of the first device (100) of FIG. 1 may be configured to receive, through at least one transceiver (106), from an AP, a frame including information related to an MDRU including a first DRU within a first DBW and a second DRU within a second DBW, and transmit, through at least one transceiver (106), to the AP, a PPDU including a data field mapped to the MDRU. Furthermore, at least one memory (104) of the first device (100) may store instructions for performing the method described in the example of FIG. 13 or examples described below when executed by the at least one processor (102).

FIG. 14 is a diagram for describing an example of an operation of an AP according to the present disclosure.

In step S1410, an AP may transmit, to a STA, a frame including information related to an MDRU including a first DRU within a first DBW and a second DRU within a second DBW.

In step S1320, the AP may receive, from the STA, a PPDU including a data field mapped to the MDRU.

In the example of FIG. 14, details regarding information related to the MDRU, and the first and the second DBWs and the first and the second DRUs based thereon are identical to those in the example of FIG. 13, and thus a repeated description is omitted.

The method described in the example of FIG. 14 may be performed by the second device (200) of FIG. 1. For example, at least one processor (202) of the second device (200) of FIG. 1 may be configured to transmit, through at least one transceiver (206), to a STA, a frame including information related to an MDRU including a first DRU within a first DBW and a second DRU within a second DBW, and receive, through at least one transceiver (206), from the STA, a PPDU including a data field mapped to the MDRU. Furthermore, at least one memory (204) of the second device (200) may store instructions for performing the method described in the example of FIG. 14 or examples described below when executed by the at least one processor (202).

Although the examples of FIG. 13 and FIG. 14 describe an example in which an AP provides, to a STA, information related to an MDRU through a frame (e.g., a trigger frame), and based thereon, the STA transmits, to the AP, a PPDU (e.g., a TB PPDU) including a data field mapped to the MDRU, the scope of the present disclosure is not limited thereto. For example, in another example of the present disclosure, a first STA may transmit, to a second STA, a PPDU including information related to an MDRU and a data field mapped to the MDRU based on the information, and the second STA may receive the PPDU from the first STA and obtain information related to the MDRU, and may decode the data field mapped to the MDRU based on the obtained information related to the MDRU.

For example, a transmitting STA (non-Ap STA or AP STA) may obtain information on a tone plan and a DRU (including an MDRU)/RRU. In the case of a non-AP STA, such information may be obtained through a trigger frame, etc., and in the case of an AP STA, such information may be obtained from a higher layer. The information on the tone plan may include a size and a position of the DRU/RRU, signaling information related to the DRU/RRU, information on a frequency band including the DRU/RRU, and information on a STA transmitting and receiving the DRU/RRU. The transmitting STA may construct/generate a PPDU based on the obtained information. The constructing/generating of a PPDU may include constructing/generating each field of the PPDU. For example, the transmitting STA may construct/generate U-SIG and/or UHR-SIG (e.g., UHR-SIG-A/B) fields including/based on the information on the tone plan. For example, the transmitting STA may construct/generate a field including signaling information indicating a bandwidth of a PPDU, and/or a field including signaling information (e.g., an N bitmap) indicating a size/position of the DRU/RRU, and/or a field including an identifier (e.g., AID) of a STA receiving the DRU/RRU. A TB PPDU transmitted by a non-AP STA may include some of the signaling information described above. The transmitting STA may generate an STF/LTF sequence transmitted through a specific DRU/RRU. The STF/LTF sequence may be generated based on a preconfigured STF generation sequence/LTF generation sequence. The transmitting STA may generate a data field (i.e., an MPDU) transmitted through a specific DRU/RRU. The transmitting STA may transmit, to a receiving STA, a PPDU including fields constructed/generated as described above. The PPDU transmission operation may perform operations such as cyclic shift diversity (CSD), spatial mapping, inverse discrete Fourier transform (IDFT)/inverse fast Fourier transform (IFFT), and GI insertion.

For example, a receiving STA (a non-AP STA or an AP STA) may receive a PPDU constructed/generated by the transmitting STA as described above. The receiving STA may receive a part or all of the PPDU and may restore original symbols/data/signals from results of CSD, spatial mapping, IDFT/IFFT, and GI insertion. The receiving STA may perform decoding on a part or all of the PPDU, and may obtain signaling information (e.g., information related to a DRU (including an MDRU)/RRU) related to a tone plan from a decoding result. For example, the receiving STA may decode L-SIG and U-SIG of the PPDU based on L-STF/L-LTF, and may obtain information included in L-SIG and U-SIG fields. Signaling information (e.g., information on a DRU/RRU) on various tone plans of the present disclosure may be included in U-SIG/UHR-SIG (e.g., UHR-SIG-A/B). Accordingly, the receiving STA may obtain information on the tone plan based on information included in U-SIG/UHR-SIG. When the receiving STA receives a TB PPDU as an AP STA, the receiving STA may already know some/all of the signaling information on the tone plan. The receiving STA may decode a remaining portion of the PPDU based on the obtained information on the tone plan. For example, the receiving STA, based on the information on the tone plan, may decode an STF/LTF field (e.g., UHR-STF/UHR-LTF) of the PPDU and may obtain an MPDU by decoding a data field. The receiving STA may deliver the decoded data to a higher layer (e.g., a MAC layer). In addition, when generation of a signal is indicated from the higher layer to a PHY layer in response to the data delivered to the higher layer, the receiving STA may perform a subsequent operation such as generation of a signal according thereto.

The examples of FIG. 13 and FIG. 14 may correspond to some of various examples of the present disclosure. Hereinafter, various examples of the present disclosure including the examples of FIG. 13 and FIG. 14 will be described in more detail.

In order to minimize an overhead for signaling information related to an MDRU, various examples of the present disclosure that limit combinations of DRUs corresponding to the MDRU will be described below. The following examples will be described based on an assumption that an MDRU is constructed by combining DRUs distributed across different channels/DBWs. Examples of the present disclosure may be similarly applied to a case in which an MDRU is constructed by combining a plurality of DRUs within the same channel/DBW, and in this case, it may be assumed that one channel/DBW is divided into a plurality of subchannels/sub-DBWs. That is, since a channel/DBW of the present disclosure corresponds to a predetermined frequency unit, its size or a distinguishing criterion may be defined in various manners.

### Embodiment 1

The present embodiment relates to a case in which sizes of a plurality of DBWs are identical. For example, as a case in which sizes of two different channels/DBWs in which DRUs are distributed are identical, 20 MHz + 20 MHz, 40 MHz + 40 MHz, 80 MHz + 80 MHz, 160 MHz + 160 MHz, etc. may be considered.

Two different channels/DBWs may be limited to two channels/DBWs that construct (or are included in) a channel/DBW having a size one level larger than (or twice) the size thereof. For example, referring to the example of FIG. 15(a) or FIG. 15(b), in the case of 20 MHz (DBW1) + 20 MHz (DBW2), two 20 MHz channels/DBWs may be included in one 40 MHz channel/DBW (DBW3). Similarly, in the case of 40 MHz (DBW1) + 40 MHz (DBW2), two 40 MHz channels/DBWs may be included in one 80 MHz channel/DBW (DBW3). In the case of 80 MHz (DBW1) + 80 MHz (DBW2), two 80 MHz channels/DBWs may be included in one 160 MHz channel/DBW (DBW3). In the case of 160 MHz (DBW1) + 160 MHz (DBW2), two 160 MHz channels/DBWs may be included in one 320 MHz channel/DBW (DBW3). For example, since DBW1 and DBW2 of an identical size spaced apart from each other may not be included in one DBW3 of twice the size, such DBWs may be excluded from an MDRU combination. For example, two DBWs of an identical size may be limited to a case in which the two DBWs are contiguous to each other.

A plurality of DRUs included in a plurality of DBWs of an identical size may have an identical size. That is, only DRUs of an identical size may be combined as an MDRU. For example, in FIG. 15(a), one MDRU may be defined by combining an x-tone DRU of DBW1 and an x-tone DRU of DBW2. For example, in FIG. 15(b), one MDRU may be defined by combining a y-tone DRU of DBW1 and a y-tone DRU of DBW2.

DRUs to be combined may be DRUs corresponding to an identical frequency position within channels/DBWs to which the respective DRUs belong. Frequency positions of two DRUs may be compared based on frequency positions of first tones of the respective DRUs. Alternatively, DRUs to be combined may be DRUs corresponding to an identical index value within channels/DBWs to which the respective DRUs belong. An index value may be associated with a frequency position, or may be assigned regardless of a correlation with the frequency position.

For example, a 20 MHz + 20 MHz MDRU may be limited to a combination of a 26-tone DRU + a 26-tone DRU, a 52-tone DRU + a 52-tone DRU, or a 106-tone DRU + a 106-tone DRU.

For example, a 40 MHz + 40 MHz MDRU may be limited to a combination of a 26-tone DRU + a 26-tone DRU, a 52-tone DRU + a 52-tone DRU, a 106-tone DRU + a 106-tone DRU, or a 242-tone DRU + a 242-tone DRU.

For example, an 80 MHz + 80 MHz MDRU may be limited to a combination of a 26-tone DRU + a 26-tone DRU, a 52-tone DRU + a 52-tone DRU, a 106-tone DRU + a 106-tone DRU, a 242-tone DRU + a 242-tone DRU, or a 484-tone DRU + a 484-tone DRU.

For example, a 160 MHz + 160 MHz MDRU may be limited to a combination of a 26-tone DRU + a 26-tone DRU, a 52-tone DRU + a 52-tone DRU, a 106-tone DRU + a 106-tone DRU, a 242-tone DRU + a 242-tone DRU, a 484-tone DRU + a 484-tone DRU, or a 996-tone DRU + a 996-tone DRU.

### Embodiment 2

The present embodiment relates to a case in which sizes of a plurality of DBWs are different from each other. For example, it may be considered that sizes of a plurality of DBWs differ by one level (or that a size of one DBW is twice the size of another DBW). For example, as a case in which sizes of two different channels/DBWs in which DRUs are distributed differ by one level, 40 MHz + 20 MHz, 80 MHz + 40 MHz, 160 MHz + 80 MHz, etc. may be considered. A DBW at a lower frequency position may have a larger size than a DBW at a higher frequency position, or a DBW at a lower frequency position may have a smaller size than a DBW at a higher frequency position.

For example, two channels/DBWs in which DRUs are distributed may be limited to a case in which the two channels/DBWs are contiguous to each other. A plurality of DBWs may be limited to be included in a channel/DBW having a size one level larger than (or twice) a size of a larger DBW among the plurality of DBWs. Referring to the example of FIG. 15(c), in the case of 40 MHz (DBW1) + 20 MHz (DBW2), two contiguous channels/DBWs (DBW1 and DBW2) may be included in one 80 MHz channel/DBW (DBW3). In the case of 80 MHz (DBW1) + 40 MHz (DBW2), two contiguous channels/DBWs (DBW1 and DBW2) may be included in one 160 MHz channel/DBW (DBW3). In the case of 160 MHz (DBW1) + 80 MHz (DBW2), two contiguous channels/DBWs (DBW1 and DBW2) may be included in one 320 MHz channel/DBW (DBW3).

Alternatively, two channels/DBWs in which DRUs are distributed may be spaced apart from each other (or may be non-contiguous). A case in which the two channels/DBWs are spaced apart may be limited to a case in which channel puncturing is applied. Referring to the example of FIG. 15(d), in the case of 40 MHz (DBW1) + 20 MHz (DBW2), two spaced-apart channels/DBWs (DBW1 and DBW2) may be included in one 80 MHz channel/DBW (DBW3), and one 20 MHz channel between DBW1 and DBW2 may be punctured. In the case of 80 MHz (DBW1) + 40 MHz (DBW2), two spaced-apart channels/DBWs (DBW1 and DBW2) may be included in one 160 MHz channel/DBW (DBW3), and one 40 MHz channel or one 20 MHz channel between DBW1 and DBW2 may be punctured. In the case of 160 MHz (DBW1) + 80 MHz (DBW2), two spaced-apart channels/DBWs (DBW1 and DBW2) may be included in one 320 MHz channel/DBW (DBW3), and one 80 MHz channel, one 40 MHz channel, or one 20 MHz channel between DBW1 and DBW2 may be punctured.

A plurality of DRUs included in a plurality of DBWs of different sizes may be of different sizes. That is, DRUs of different sizes may be combined as an MDRU. For example, in FIG. 15(c) or FIG. 15(d), one MDRU may be defined by combining a DRU of an (n+1)-th size of DBW1 and a DRU of an n-th size of DBW2. A DRU of a first size may correspond to a 26-tone DRU, a DRU of a second size may correspond to a 52-tone DRU, a DRU of a third size may correspond to a 106-tone DRU, a DRU of a fourth size may correspond to a 242-tone DRU, a DRU of a fifth size may correspond to a 484-tone DRU, and a DRU of a sixth size may correspond to a 996-tone DRU. As described above, when DRUs are combined, a DRU within a channel/DBW of a larger size may be a DRU of a size one level larger than a DRU within a channel/DBW of a smaller size.

For each of DRUs combined as one MDRU, a number of candidate DRUs in each channel/DBW may be identical. For example, a number of candidates for a 106-tone DRU within a 40 MHz channel/DBW is four, and a number of candidates for a 52-tone DRU within a 20 MHz channel/DBW is four. In this case, DRUs combined as one MDRU may be DRUs having an identical frequency position (or frequency order) on different channels/DBWs. A frequency position/order of a DRU may be compared based on a position of a first (or lowest) subcarrier of the DRU. For example, a case may be considered in which first to fourth 106-tone DRU candidates exist in a frequency order within a 40 MHz channel/DBW, and first to fourth 52-tone DRU candidates exist in a frequency order within a 20 MHz channel/DBW. In this case, one MDRU may be defined by combining the first 106-tone DRU and the first 52-tone DRU, or one MDRU may be defined by combining the second 106-tone DRU and the second 52-tone DRU, or one MDRU may be defined by combining the third 106-tone DRU and the third 52-tone DRU, or one MDRU may be defined by combining the fourth 106-tone DRU and the fourth 52-tone DRU.

A number of candidates for a 26-tone DRU within one channel/DBW may not be identical to a number of candidates for a 52-tone DRU within another channel/DBW. For example, a number of 26-tone DRUs is 9 in a 20 MHz channel/DBW, 18 in a 40 MHz channel/DBW, and 36 in an 80 MHz channel/DBW. A number of 52-tone DRUs is 4 in a 20 MHz channel/DBW, 8 in a 40 MHz channel/DBW, 16 in an 80 MHz channel/DBW, and 32 in a 160 MHz channel/DBW. A number of 106-tone DRUs is 2 in a 20 MHz channel/DBW, 4 in a 40 MHz channel/DBW, 8 in an 80 MHz channel/DBW, and 16 in a 160 MHz channel/DBW. A number of 242-tone DRUs is 2 in a 40 MHz channel/DBW, 4 in an 80 MHz channel/DBW, and 8 in a 160 MHz channel/DBW. A number of 484-tone DRUs is 2 in an 80 MHz channel/DBW and 4 in a 160 MHz channel/DBW. A number of 996-tone DRUs is 2 in a 160 MHz channel/DBW.

In consideration thereof, a number of candidates for a 26-tone DRU that may be combined as an MDRU may be limited to 8 in a 20 MHz channel/DBW, 16 in a 40 MHz channel/DBW, and 32 in an 80 MHz channel/DBW. For example, for a 26-tone DRU, a number of candidates for a 26-tone DRU that may be combined as an MDRU may be defined by excluding 1 out of 9 in a 20 MHz channel/DBW, excluding 2 out of 16 in a 40 MHz channel/DBW, and excluding 4 out of 36 in an 80 MHz channel/DBW.

For example, one MDRU may be defined by combining one of 8 candidates for a 26-tone DRU in a 20 MHz channel/DBW and one of 8 candidates for a 52-tone DRU in a 40 MHz channel/DBW. One MDRU may be defined by combining one of 16 candidates for a 26-tone DRU in a 40 MHz channel/DBW and one of 16 candidates for a 52-tone DRU in an 80 MHz channel/DBW. One MDRU may be defined by combining one of 32 candidates for a 26-tone DRU in an 80 MHz channel/DBW and one of 32 candidates for a 52-tone DRU in a 160 MHz channel/DBW. A frequency position/order of one 26-tone DRU in one channel/DBW may be identical to a frequency position/order of one 52-tone DRU in another channel/DBW.

For a 26-tone DRU, 26-tone DRUs that are not included in candidates for MDRU combinations, the numbers of which are 1, 2, and 4 in 20 MHz, 40 MHz, and 80 MHz channels/DBWs, respectively, may be defined as follows. In examples of the present disclosure, a DRU index may correspond to a frequency order (i.e., an order from a lower frequency to a higher frequency), or a DRU index may be assigned regardless of the frequency order.

For example, one 26-tone DRU that is not included in candidates for MDRU combinations in a 20 MHz channel/DBW may be defined as follows: a fifth 26-tone DRU according to a frequency order; one 26-tone DRU that is not used to construct a 52-tone DRU; a last 26-tone DRU according to a frequency order; a first 26-tone DRU according to a frequency order; a 26-tone DRU corresponding to the last (highest) index from a DRU index perspective; or a 26-tone DRU corresponding to the first (lowest) index from a DRU index perspective.

For example, two 26-tone DRUs that are not included in candidates for MDRU combinations in a 40 MHz channel/DBW may be defined as follows: fifth and fourteenth 26-tone DRUs according to a frequency order; two 26-tone DRUs that are not used to construct a 52-tone DRU; last two 26-tone DRUs according to a frequency order; first two 26-tone DRUs according to a frequency order; 26-tone DRUs corresponding to the last (highest) two indices from a DRU index perspective; or 26-tone DRUs corresponding to the first (lowest) two indices from a DRU index perspective.

For example, four 26-tone DRUs that are not included in candidates for MDRU combinations in an 80 MHz channel/DBW may be defined as follows: fifth, fourteenth, twenty-third, and thirty-second 26-tone DRUs according to a frequency order; four 26-tone DRUs that are not used to construct a 52-tone DRU; last four 26-tone DRUs according to a frequency order; first four 26-tone DRUs according to a frequency order; 26-tone DRUs corresponding to the last (highest) four indices from a DRU index perspective; or 26-tone DRUs corresponding to the first (lowest) four indices from a DRU index perspective.

When sizes of two different channels in which DRUs are distributed are different from each other, examples of combinations of DRU sizes combined as one MDRU may be defined as follows. Here, positions of respective DRUs within the respective channels/DBWs may correspond to an identical frequency order, and for 26-tone DRUs, an order/index may be assigned to remaining 26-tone DRU candidates excluding the number of 26-tone DRUs described above.
40 MHz + 20 MHz MDRU: 52-tone DRU + 26-tone DRU, 106-tone DRU + 52-tone DRU, 242-tone DRU + 106-tone DRU
80 MHz + 40 MHz MDRU: 52-tone DRU + 26-tone DRU, 106-tone DRU + 52-tone DRU, 242-tone DRU + 106-tone DRU, 484-tone DRU + 242-tone DRU
160 MHz + 80 MHz MDRU: 52-tone DRU + 26-tone DRU, 106-tone DRU + 52-tone DRU, 242-tone DRU + 106-tone DRU, 484-tone DRU + 242-tone DRU, 996-tone DRU + 484-tone DRU

### Embodiment 3

As an additional example to the examples of combinations of DRUs of an identical frequency order in Embodiment 1 and Embodiment 2 described above, DRU candidates that may be combined as an MDRU may be limited to combinations of DRUs of an identical index value. As described above, an index for a DRU may not have a correlation with a frequency order.

In the case of a 26-tone DRU, continuous index values (e.g., index values 1 to 8 in a 20 MHz channel/DBW, index values 1 to 16 in a 20 MHz channel/DBW, and index values 1 to 32 in an 20 MHz channel/DBW) may be assigned to the remaining 8, 16, and 32 26-tone DRU candidates excluding 1, 2, and 4 26-tone DRUs that are excluded for the 20 MHz, 40 MHz, and 80 MHz channels/DBWs, respectively.

### Embodiment 4

In the case of a combination of a 52-tone DRU + a 26-tone DRU in a 40 MHz + 20 MHz MDRU, one fixed 26-tone DRU may be combined, and any one of 8 candidates for a 52-tone DRU may be combined. In this case, only one MDRU corresponding to a combination of a 52-tone DRU + a 26-tone DRU in the corresponding channel may be defined/used.

For example, one fixed 26-tone DRU in a 20 MHz channel/DBW may be defined as follows: a fifth 26-tone DRU according to a frequency order; one 26-tone DRU that is not used to construct a 52-tone DRU; a last 26-tone DRU according to a frequency order; a first 26-tone DRU according to a frequency order; a 26-tone DRU corresponding to the last (highest) index from a DRU index perspective; or a 26-tone DRU corresponding to the first (lowest) index from a DRU index perspective.

Next, in the case of a combination of a 52-tone DRU + a 26-tone DRU in an 80 MHz + 40 MHz MDRU, one of two fixed 26-tone DRUs may be combined, and any one of 16 candidates for a 52-tone DRU may be combined. In this case, at most two MDRUs corresponding to a combination of a 52-tone DRU + a 26-tone DRU may be defined/used in the corresponding channel.

For example, two fixed 26-tone DRUs in a 40 MHz channel/DBW may be defined as follows: fifth and fourteenth 26-tone DRUs according to a frequency order; two 26-tone DRUs that are not used to construct a 52-tone DRU; last two 26-tone DRUs according to a frequency order; first two 26-tone DRUs according to a frequency order; 26-tone DRUs corresponding to the last (highest) two indices from a DRU index perspective; or 26-tone DRUs corresponding to the first (lowest) two indices from a DRU index perspective.

Candidates for a 52-tone DRU that may be combined with two fixed 26-tone DRUs may be distinguished into two groups. A 52-tone DRU belonging to a first group may be combined with one of the two fixed 26-tone DRUs, and a 52-tone DRU belonging to a second group may be combined with another one of the two fixed 26-tone DRUs. For example, the first group may include even-numbered 52-tone DRUs according to a frequency order, and the second group may include odd-numbered 52-tone DRUs according to a frequency order. Alternatively, the first group may include 52-tone DRUs corresponding to even index values, and the second group may include 52-tone DRUs corresponding to odd index values. Alternatively, the first group may include 52-tone DRUs corresponding to the lowest 8 frequency positions, and the second group may include 52-tone DRUs positioned at the highest 8 frequencies. Alternatively, the first group may include 52-tone DRUs corresponding to the lowest 8 index values, and the second group may include 52-tone DRUs corresponding to the highest 8 index values.

Next, in the case of a combination of a 52-tone DRU + a 26-tone DRU in a 160 MHz + 80 MHz MDRU, one of four fixed 26-tone DRUs may be combined, and any one of 32 candidates for a 52-tone DRU may be combined. In this case, at most four MDRUs corresponding to a combination of a 52-tone DRU + a 26-tone DRU may be defined/used in the corresponding channel.

For example, four fixed 26-tone DRUs in an 80 MHz channel/DBW may be defined as follows: fifth, fourteenth, twenty-third, and thirty-second 26-tone DRUs according to a frequency order; four 26-tone DRUs that are not used to construct a 52-tone DRU; last four 26-tone DRUs according to a frequency order; first four 26-tone DRUs according to a frequency order; 26-tone DRUs corresponding to the last (highest) four indices from a DRU index perspective; or 26-tone DRUs corresponding to the first (lowest) four indices from a DRU index perspective.

Candidates for a 52-tone DRU that may be combined with four fixed 26-tone DRUs may be distinguished into four groups. A 52-tone DRU belonging to a first group may be combined with a first 26-tone DRU among the four fixed 26-tone DRUs, a 52-tone DRU belonging to a second group may be combined with a second 26-tone DRU among the four fixed 26-tone DRUs, a 52-tone DRU belonging to a third group may be combined with a third 26-tone DRU among the four fixed 26-tone DRUs, and a 52-tone DRU belonging to a fourth group may be combined with a fourth 26-tone DRU among the four fixed 26-tone DRUs. For example, the first group may include 52-tone DRUs corresponding to a remainder value of 1 when a value (f) of a frequency order is divided by 4 (i.e., f mod 4 = 1), the second group may include 52-tone DRUs corresponding to f mod 4 = 2, the third group may include 52-tone DRUs corresponding to f mod 4 = 3, and the fourth group may include 52-tone DRUs corresponding to f mod 4 = 0. Alternatively, the first group may include 52-tone DRUs corresponding to a remainder value of 1 when an index value (i) is divided by 4 (i.e., i mod 4 = 1), the second group may include 52-tone DRUs corresponding to i mod 4 = 2, the third group may include 52-tone DRUs corresponding to i mod 4 = 3, and the fourth group may include 52-tone DRUs corresponding to i mod 4 = 0. Alternatively, the first group may include 52-tone DRUs corresponding to the lowest 8 frequency positions, the second group may include 52-tone DRUs corresponding to the second lowest 8 frequency positions, the third group may include 52-tone DRUs corresponding to the second highest 8 frequency positions, and the fourth group may include 52-tone DRUs corresponding to the highest 8 frequency positions. Alternatively, the first group may include 52-tone DRUs corresponding to the lowest 8 index values, the second group may include 52-tone DRUs corresponding to the second lowest 8 index values, the third group may include 52-tone DRUs corresponding to the second highest 8 index values, and the fourth group may include 52-tone DRUs corresponding to the highest 8 index values.

When combining a 26-tone DRU that is not used to construct a 52-tone DRU in a 20/40/80 MHz channel/DBW and any one 52-tone DRU in a 40/80/160 MHz channel/DBW, since a plurality of DRUs having a size equal to or larger than a 52-tone DRU may be used in the 20/40/80 MHz channel/DBW, a gain may be expected in terms of throughput.

### Embodiment 5

Information related to an MDRU may be included in a trigger frame that triggers a TB PPDU. Alternatively, information related to an MDRU may be included in SIG field(s) within a DL PPDU (e.g., a PPDU transmitted in a DL OFDMA scheme).

Such information related to an MDRU may include information on which MDRU corresponding to which combination of DRUs is allocated using an existing RU allocation scheme. In addition, information on a channel to which a DRU is applied, information on a DBW, information on application of puncturing, etc. may be provided, to a STA intending to transmit a TB PPDU based on the MDRU or a STA receiving a PPDU based on the MDRU, by being included in the information related to the MDRU or together with the information related to the MDRU, and the corresponding STA may identify and apply a channel configuration and DRU information, etc. accordingly.

In addition, when the MDRU restriction rule in the above-described embodiments is defined/set/applied, information on an MDRU allocation may provide information on one DRU among DRUs combined for a specific MDRU and additionally provide information indicating whether the MDRU is applied (e.g., a 1-bit indicator), instead of providing information on each of the DRUs combined for the specific MDRU. A STA receiving such information related to the MDRU may directly/explicitly obtain information on a first DRU among two DRUs combined for the MDRU, and may indirectly/implicitly obtain a second DRU from a restriction rule under which the second DRU may be combined with the first DRU. For example, a second DRU corresponding to a frequency position/index value that is identical/associated with a frequency position/index value of the first DRU may be specified.

In a case in which application of a DRU is supported, unlike an existing WLAN system in which only an RRU is applied, efficiency of resource utilization may be improved by transmitting/receiving at least one field of a PPDU based on a data symbol-based and/or block-based DRU tone plan according to the present disclosure. Additionally, in a method of constructing an MDRU using combinations of DRUs according to the present disclosure, by applying limited DRU combinations, there is a technical effect in that signaling overhead in application of a DRU for improving a power gain and/or a data rate is reduced.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, but may be applied to various WLAN or wireless communication systems other than the IEEE 802.11-based system.

## Claims

1. A method comprising:
receiving, by a station (STA) from an access point (AP), a frame including information related to a multiple distributed resource unit (MDRU) including a first distributed resource unit (DRU) within a first distribution bandwidth (DBW) and a second DRU within a second DBW; and
transmitting, by the STA to the AP, a physical layer protocol data unit (PPDU) including a data field mapped to the MDRU,
wherein information related to the MDRU includes information on an index of the first DRU, and
wherein an index of the second DRU is associated with an index of the first DRU.

2. The method of claim 1,
wherein a size of the first DBW and a size of the second DBW are identical.

3. The method of claim 2,
wherein, in a frequency domain, the first DBW and the second DBW are included in a position of a third DBW having a size that is twice a size of the first DBW or a size of the second DBW.

4. The method of claim 2,
wherein a size of the first DRU and a size of the second DRU are identical.

5. The method of claim 1,
wherein a size of the first DBW and a size of the second DBW are different.

6. The method of claim 5,
wherein a size of the first DBW is twice a size of the second DBW.

7. The method of claim 5,
wherein, in a frequency domain, the first DBW and the second DBW are included in a position of a third DBW having a size that is twice a size of the first DBW.

8. The method of claim 5,
wherein the first DBW and the second DBW are contiguous or spaced apart in a frequency domain.

9. The method of claim 8,
wherein the first DBW and the second DBW being spaced apart in the frequency domain includes at least one channel between the first DBW and the second DBW being punctured.

10. The method of claim 5,
wherein the first DRU corresponds to a DRU of an (n+1)-th size,
wherein the second DRU corresponds to a DRU of an n-th size, and
wherein n is an integer greater than 0.

11. The method of claim 10,
wherein a DRU of a first size corresponds to a 26-tone DRU,
wherein a DRU of a second size corresponds to a 52-tone DRU,
wherein a DRU of a third size corresponds to a 106-tone DRU,
wherein a DRU of a fourth size corresponds to a 242-tone DRU,
wherein a DRU of a fifth size corresponds to a 484-tone DRU, and
wherein a DRU of a sixth size corresponds to a 996-tone DRU.

12. The method of claim 5,
wherein a number of candidates for a value of an index of the first DRU in the first DBW is identical to a number of candidates for a value of an index of the second DRU in the second DBW.

13. The method of claim 12,
wherein a candidate for an index value of the second DRU among a set of values of indices of DRUs of an n-th size in the second DBW includes at least one remaining index other than at least one index of a DRU of the n-th size that is not included in a position of a DRU of an (n+1)-th size in a frequency domain.

14. The method of claim 5,
wherein a candidate for an index value of the second DRU among a set of values of indices of DRUs of an n-th size in the second DBW includes at least one index of a DRU of the n-th size that is not included in a position of a DRU of an (n+1)-th size in a frequency domain.

15. The method of claim 1,
wherein a value of the index of the first DRU and a value of the index of the second DRU are identical.

16. The method of claim 1,
wherein, based on information related to the MDRU including information representing that the MDRU is applied to the PPDU,
an index of the second DRU is derived based on an index of the first DRU and a predetermined mapping relationship between an index of the first DRU and an index of the second DRU.

17. The method of claim 1,
wherein the frame is a trigger frame, and
wherein the PPDU is a trigger-based (TB) PPDU.

18. An apparatus comprising:
at least one transceiver; and
at least one processor connected to the at least one transceiver,
wherein the at least one processor is configured to:
receive, through the at least one transceiver, from an access point (AP), a frame including information related to a multiple distributed resource unit (MDRU) including a first distributed resource unit (DRU) within a first distribution bandwidth (DBW) and a second DRU within a second DBW; and
transmit, through the at least one transceiver, to the AP, a physical layer protocol data unit (PPDU) including a data field mapped to the MDRU,
wherein information related to the MDRU includes information on an index of the first DRU, and
wherein an index of the second DRU is associated with an index of the first DRU.

19. A method comprising:
transmitting, by an access point (AP) to a station (STA), a frame including information related to a multiple distributed resource unit (MDRU) including a first distributed resource unit (DRU) within a first distribution bandwidth (DBW) and a second DRU within a second DBW; and
receiving, by the AP from the STA, a physical layer protocol data unit (PPDU) including a data field mapped to the MDRU,
wherein information related to the MDRU includes information on an index of the first DRU, and
wherein an index of the second DRU is associated with an index of the first DRU.

20. An apparatus comprising:
at least one transceiver; and
at least one processor connected to the at least one transceiver,
wherein the at least one processor is configured to:
transmit, through the at least one transceiver, to a station (STA), a frame including information related to a multiple distributed resource unit (MDRU) including a first distributed resource unit (DRU) within a first distribution bandwidth (DBW) and a second DRU within a second DBW; and
receive, through the at least one transceiver, from the STA, a physical layer protocol data unit (PPDU) including a data field mapped to the MDRU,
wherein information related to the MDRU includes information on an index of the first DRU, and
wherein an index of the second DRU is associated with an index of the first DRU.

21. A processing device comprising:
at least one processor; and
at least one computer memory operably connected to the at least one processor, and based on being executed by the at least one processor, storing instructions for performing a method according to any one of Claim 1 to Claim 17.

22. At least one non-transitory computer-readable medium storing at least one instruction that controls to perform a method according to any one of Claim 1 to Claim 17 by being executed by at least one processor.
